(19) Europäisches Patentamt
European Patent Office
Office européen des brevets

(11) **EP 4 447 564 A1**

(12) **EUROPEAN PATENT APPLICATION**

(43) Date of publication:
**16.10.2024  Bulletin 2024/42**

(21) Application number: **24165147.0**

(22) Date of filing: **21.03.2024**

(51) International Patent Classification (IPC):
**H04W 52/24** (2009.01)    **H04B 7/06** (2006.01)
**H04W 52/34** (2009.01)

(52) Cooperative Patent Classification (CPC):
**H04W 52/241; H04B 7/0452; H04B 7/0626;
H04W 52/346;** H04W 52/262; H04W 52/267

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.04.2023  US 202318299498**

(71) Applicant: **Viavi Solutions Inc.
Chandler, AZ 85286 (US)**

(72) Inventors:
• **DIZDAR, Onur
  London, W4 3DF (GB)**
• **SATTARZADEH HASHEMI, Ata
  Guildford, GU1 3NA (GB)**
• **YAP, Yi Xien
  Potters Bar, EN6 1UP (GB)**
• **WANG, Stephen
  London, SW6 6NG (GB)**

(74) Representative: **Murgitroyd & Company
165-169 Scotland Street
Glasgow G5 8PL (GB)**

(54) **PRECODER AND RESOURCE ALLOCATION FOR RATE-SPLITTING MULTIPLE ACCESS IN OVERLOADED NETWORKS**

(57)     A device may determine whether to utilize perfect channel state information at transmitter (CSIT) or imperfect CSIT, and may calculate, based on determining to utilize the perfect CSIT, a first power allocation, a first rate allocation, and a first precoder allocation for a private stream of a user device. The device may determine first parameters or second parameters for the first power allocation, the first rate allocation, and the first precoder allocation, and may generate a first transmit signal and a first data allocation based on the first power allocation, the first rate allocation, the first precoder allocation, and the first parameters or the second parameters. The device may provide the first transmit signal, with the first data allocation, to the user device via the private stream.

FIG. 1A

EP 4 447 564 A1

**Description**

BACKGROUND

Demand for increased connectivity and user density has become a key performance indicator for state-of-the-art communications standards, and an increasing trend of these parameters is expected to continue in the future. Ubiquitous coverage over a massive quantity of user devices (e.g., mobile telephones, Internet of Things (IoT) devices, tablet computers, and/or the like) is necessary to realize wireless networks of the future. This creates several challenges in wireless network design, such as, user scheduling, interference management, channel state information (CSI) acquisition from each user device to be served.

SUMMARY

Some implementations described herein relate to a method. The method may include determining whether to utilize perfect channel state information at transmitter (CSIT) or imperfect CSIT, and calculating, based on determining to utilize the perfect CSIT, a first power allocation, a first rate allocation, and a first precoder allocation for a private stream of a user device. The method may include determining first parameters or second parameters for the first power allocation, the first rate allocation, and the first precoder allocation, and generating a first transmit signal and a first data allocation based on the first power allocation, the first rate allocation, the first precoder allocation, and the first parameters or the second parameters. The method may include providing the first transmit signal, with the first data allocation, to the user device via the private and common streams.

The method may further comprise: calculating, based on determining to utilize the imperfect CSIT, a second power allocation, a second rate allocation, and a second precoder allocation for the private stream of the user device; and determining third parameters or fourth parameters for the second power allocation, the second rate allocation, and the second precoder allocation. The method may further comprise: generating a second transmit signal and a second data allocation based on the second power allocation, the second rate allocation, the second precoder allocation, and the third parameters or the fourth parameters; and providing the second transmit signal, with the second data allocation, to the user device via the private stream. Providing the second transmit signal, with the second data allocation, to the user device via the private stream may comprise: providing the second transmit signal, with the second data allocation, to the user device via the private stream and in accordance with a rate-splitting multiple access framework. Calculating the second power allocation, the second rate allocation, and the second precoder allocation for the private stream of the user device may comprises: utilizing a maximum-minimum fairness optimization to calculate the second power allocation, the second rate allocation, and the second precoder allocation for the private stream of the user device. Determining the third parameters or the fourth parameters for the second power allocation, the second rate allocation, and the second precoder allocation may comprise: determining the third parameters for the second power allocation, the second rate allocation, and the second precoder allocation based on first settings; or determining the fourth parameters for the second power allocation, the second rate allocation, and the second precoder allocation based on second settings. The device may be a base station serving a quantity of user devices that is greater than a quantity of antennas of the base station.

Some implementations described herein relate to a device. The device may include one or more memories and one or more processors coupled to the one or more memories. The one or more processors may be configured to determine whether to utilize perfect CSIT or imperfect CSIT, and calculate, based on determining to utilize the perfect CSIT, a first power allocation, a first rate allocation, and a first precoder allocation for a private stream of a user device, wherein the device is a base station serving a quantity of user devices that is greater than a quantity of antennas of the base station. The one or more processors may be configured to determine first parameters or second parameters for the first power allocation, the first rate allocation, and the first precoder allocation, and generate a first transmit signal and a first data allocation based on the first power allocation, the first rate allocation, the first precoder allocation, and the first parameters or the second parameters. The one or more processors may be configured to provide the first transmit signal, with the first data allocation, to the user device via the private and common streams.

The device may serve multiple user devices and provides a non-zero ergodic rate for each of the multiple user devices. The one or more processors, to determine whether to utilize perfect CSIT or imperfect CSIT, may be configured to: determine whether to utilize perfect CSIT or imperfect CSIT based on one or more of channel estimation errors, finite-length CSI feedback, user device mobility, latency, or pilot contamination associated with the device. The one or more processors, to determine the first parameters or the second parameters for the first power allocation, the first rate allocation, and the first precoder allocation, may be configured to: determine the first parameters for the first power allocation, the first rate allocation, and the first precoder allocation based on first settings; or determine the second parameters for the first power allocation, the first rate allocation, and the first precoder allocation based on second settings. The one or more processors, to provide the first transmit signal, with the first data allocation, to the user device via the private stream, may be configured to: provide the first transmit signal, with the first data allocation, to the user device via the private stream and in accordance with a rate-splitting multiple access framework. The one or more processors may be further configured to: provide a common stream to the user device and to other user devices associated with the device. The one or more processors, to calculate the first power allocation, the first rate allocation, and the first precoder allocation for the private stream of the user device, are configured to: utilize a maximum-minimum fairness optimization to calculate the first power allocation, the first rate allocation, and the first precoder allocation for the private stream of the user device.

Some implementations described herein relate to a non-transitory computer-readable medium that stores a set of instructions. The set of instructions, when executed by one or more processors of a device, may cause the device to determine whether to utilize perfect CSIT or imperfect CSIT, and calculate, based on determining to utilize the perfect CSIT, a first power allocation, a first rate allocation, and a first precoder allocation for private and common streams of a user device. The set of instructions, when executed by one or more processors of the device, may cause the device to determine first parameters or second parameters for the first power allocation, the first rate allocation, and the first precoder allocation, and calculate, based on determining to utilize the imperfect CSIT, a second power allocation, a second rate allocation, and a second precoder allocation for the private and common streams of the user device. The set of instructions, when executed by one or more processors of the device, may cause the device to determine third parameters or fourth parameters for the second power allocation, the second rate allocation, and the second precoder allocation, and generate a first transmit signal and a first data allocation based on the first power allocation, the first rate allocation, the first precoder allocation, and the first parameters or the second parameters. The set of instructions, when executed by one or more processors of the device, may cause the device to generate a second transmit signal and a second data allocation based on the second power allocation, the second rate allocation, the second precoder allocation, and the third parameters or the fourth parameters, and provide the first transmit signal or the second transmit signal, with the first data allocation or the second data allocation, to the user device via the private and common streams.

The one or more instructions, that cause the device to provide the first transmit signal or the second transmit signal, with the first data allocation or the second data allocation, to the user device via the private stream, may cause the device to: provide the first transmit signal or the second transmit signal, with the first data allocation or the second data allocation, to the user device via the private stream and in accordance with a rate-splitting multiple access framework. The one or more instructions, that cause the device to determine whether to utilize perfect CSIT or imperfect CSIT, may cause the device to: determine whether to utilize perfect CSIT or imperfect CSIT based on one or more of channel estimation errors, finite-length CSI feedback, user device mobility, latency, or pilot contamination associated with the device. The one or more instructions, that cause the device to determine the first parameters or the second parameters for the first power allocation, the first rate allocation, and the first precoder allocation, may cause the device to: determine the first parameters for the first power allocation, the first rate allocation, and the first precoder allocation based on first settings; or determine the second parameters for the first power allocation, the first rate allocation, and the first precoder allocation based on second settings. The one or more instructions further may cause the device to: provide a common stream to the user device and to other user devices associated with the device. The one or more instructions, that cause the device to calculate the first power allocation, the first rate allocation, and the first precoder allocation for the private stream of the user device, may cause the device to: utilize a maximum-minimum fairness optimization to calculate the first power allocation, the first rate allocation, and the first precoder allocation for the private stream of the user device.

## BRIEF DESCRIPTION OF THE DRAWINGS

Figs. 1A-1I are diagrams of an example implementation described herein.
Fig. 2 is a diagram of an example environment in which systems and/or methods described herein may be implemented.
Fig. 3 is a diagram of example components of one or more devices of Fig. 2.
Fig. 4 is a flowchart of an example process for precoder and resource allocation for rate-splitting multiple access (RSMA) in overloaded networks.

## DETAILED DESCRIPTION

The following detailed description of example implementations refers to the accompanying drawings. The same reference numbers in different drawings may identify the same or similar elements.

A technology that supports connectivity in state-of-the-art communication systems is multi-user multiple-input multiple-output (MU-MIMO). MU-MIMO makes use of a spatial dimension to support multiple user devices in the same time and frequency resources. A form of MU-MIMO is multi-user linear precoding or space division multiple access (SDMA), which performs linear precoding to separate user device streams at a base station and treats multi-user interference as noise at the user devices. A degree-of-freedom (DoF) analysis shows that when perfect channel state information (CSI) at transmitter (CSIT) is available for all user devices, SDMA is optimal in an underloaded multi-antenna broadcast channel (BC), where the quantity of antennas at the base station is greater than a quantity of user devices. This makes SDMA a popular choice in state-of-the-art communication standards, even though optimality conditions are difficult to satisfy in practical systems.

The trend of increasing user density implies that overloaded systems will be a common occurrence in the next generation networks. In overloaded systems, the quantity of user devices to be served is greater than the quantity of base station antennas. Overloaded systems have become common especially in emerging application scenarios, such as massive Internet of Things (IoT) and satellite communications. Such systems suffer from increased overhead and complexity due to signaling and user scheduling, which may bring a significant burden to the systems with increasing quantities of user devices. As the multi-user interference cannot be fully cancelled even with perfect CSIT, the DoF of overloaded SDMA systems collapse to zero, leading to a saturating achievable rate with an increasing signal-to-noise ratio (SNR). Additionally, acquiring accurate CSIT, which is a major challenge in practical systems, becomes even more challenging with increasing user device density due to increased overhead and signaling requirements. Imperfect CSIT stems from numerous factors in multi-antenna networks, such as channel estimation errors, finite-length CSI feedback, user device mobility and network latency, pilot contamination, and/or the like. Using imperfect CSIT for multiple-access transmission leads to multi-user interference between the transmitted streams and performance degradation, the impact of which depends on a source and a severity of CSIT inaccuracy.

Therefore, current techniques for handling an overloaded network (e.g., a base station) consume computing resources (e.g., processing resources, memory resources, communication resources, and/or the like), networking resources, and/or the like associated with performing unnecessary and computationally intensive decoding operations, performing an unnecessary descrambling operation, performing an exhaustive search for a scrambling sequence initialization vector, and/or the like.

Some implementations described herein relate to a base station that performs precoder and resource allocation for rate-splitting multiple access (RSMA) in overloaded networks. For example, the base station may determine whether to utilize perfect CSIT or imperfect CSIT, and may calculate, based on determining to utilize the perfect CSIT, a first power allocation, a first rate allocation, and a first precoder allocation for a private stream of a user device. The base station may determine first parameters or second parameters for the first power allocation, the first rate allocation, and the first precoder allocation, and may calculate, based on determining to utilize the imperfect CSIT, a second power allocation, a second rate allocation, and a second precoder allocation for the private stream of the user device. The base station may determine third parameters or fourth parameters for the second power allocation, the second rate allocation, and the second precoder allocation, and may generate a first transmit signal and a first data allocation based on the first power allocation, the first rate allocation, the first precoder allocation, and the first parameters or the second parameters. The base station may generate a second transmit signal and a second data allocation based on the second power allocation, the second rate allocation, the second precoder allocation, and the third parameters or the fourth parameters, and may provide the first transmit signal or the second transmit signal, with the first data allocation or the second data allocation, to the user device via the private and common streams.

In this way, the base station performs precoder and resource allocation for RSMA in overloaded networks. For example, the base station may include a quantity of transmit antennas that is less than a quantity of the user devices (e.g., overloading the base station). The base station may perform precoder, rate, and power allocation for RSMA to serve the user devices at the same time and may utilize frequency resources from a single transmitter with low complexity. The complexity and latency of the precoder, rate, and power allocation is less than the complexity and latency of obtaining the precoder, rate, and power allocation by an exhaustive search. The performance of RSMA by the base station is greater than several conventional multiple-access schemes with or without user scheduling and with and without perfect CSIT. This, in turn, conserves computing resources, networking resources, and/or the like that would otherwise have been consumed in performing unnecessary and computationally intensive decoding operations, performing an unnecessary descrambling operation, performing an exhaustive search for a scrambling sequence initialization vector, and/or the like.

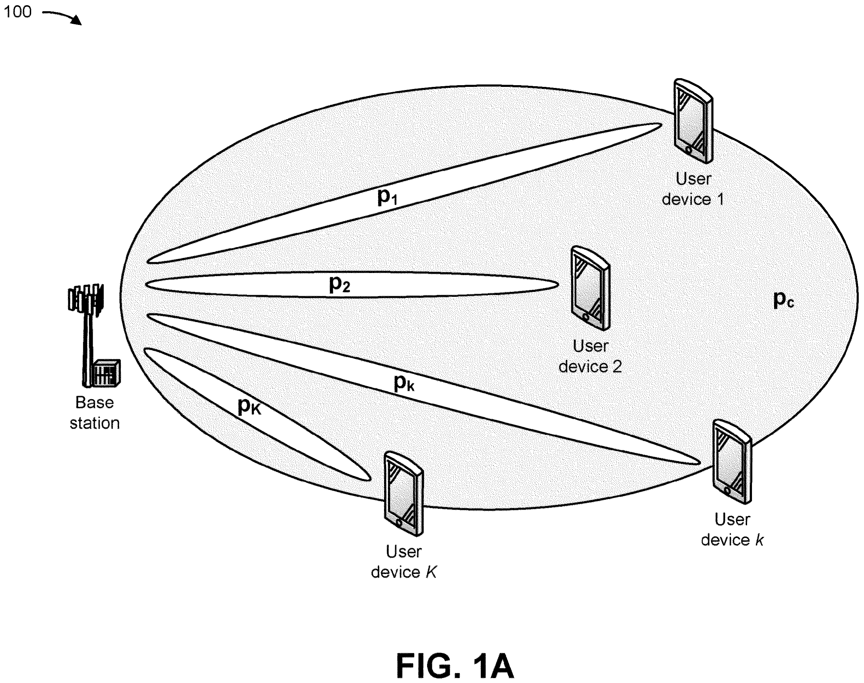

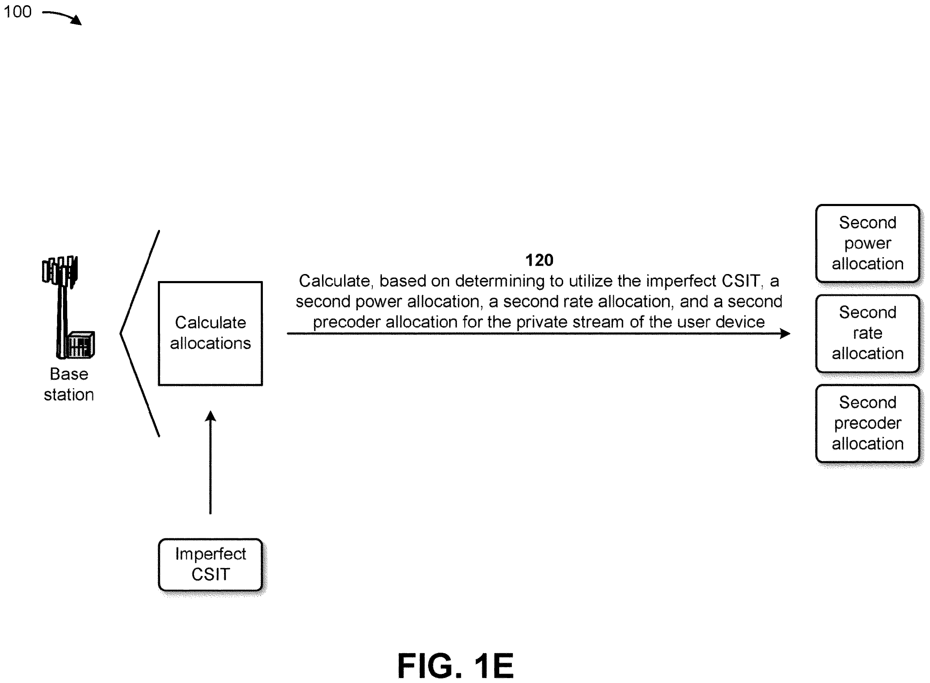

Figs. 1A-1I are diagrams of an example 100 associated with precoder and resource allocation for RSMA in overloaded networks. As shown in Figs. 1A-1I, example 100 includes a base station associated with multiple user devices (e.g., user device 1, user device 2, user device *k,* and user device *K*). The base station may perform precoder and resource allocation for RSMA (e.g., for the user devices) in overloaded networks. Further details of the base station and the user device are provided elsewhere herein.

Implementations described herein relate to a base station that provides RSMA by user devices to perform multiple-access communications in overloaded networks with perfect and imperfect CSIT. RSMA is a multiple access technique for a multi-antenna base station that relies on linearly precoded rate-splitting (RS) at the base station and successive interference cancellation (SIC) at the receivers (e.g., the user devices). Enabled by these operations, RSMA may partially decode the multi-user interference, and may partially treat the multi-user interference as noise. RSMA may bridge extremes of treating multi-user interference as noise, such as in SDMA, and of fully decoding the multi-user interference, such as in non-orthogonal multiple access (NOMA). RSMA may encapsulate and outperform existing multiple access techniques, such as SDMA, NOMA, orthogonal multiple access (OMA), multicasting, and/or the like, and may address problems in state-of-the-art communication systems due to its flexible nature and interference management capabilities.

Vectors may be denoted herein by bold lowercase letters. The operations |. | and ∥. ∥ may denote cardinality of a set or an absolute value of a scalar and an $l_2$-norm of a vector, respectively. $a^T$ and $a^H$ may denote a transpose and a Hermitian transpose of a vector $a$, respectively. $\mathcal{CN}$ (0, $\sigma^2$) may denote a circularly symmetric complex Gaussian distribution with a zero mean and a variance $\sigma^2$. $I$ may denote the identity matrix, and $\lfloor \cdot \rceil$ may denote a round operation. Logarithms may be natural logarithms, i.e., log(.) = $\log_e$(. ), unless stated otherwise. Gamma($D$, $\theta$) may represent a

gamma distribution with a probability density function $f(x) = \dfrac{1}{\Gamma(D)\theta^D} x^{D-1} e^{-\frac{x}{\theta}}$. For any complex x with a positive real

part, $\Gamma(x) = \int_0^\infty t^{x-1} e^{-t} dt$ may be a gamma function, $\Gamma'(x)$ may be a derivative of $\Gamma(x)$ with respect to $x$, and

$\psi(x) = \dfrac{\Gamma'(x)}{\Gamma(x)}$. $\gamma \approx$ 0.577 may be a Euler-Mascheroni constant.

As shown in Fig. 1A, the base station may include $N$ transmit antennas that serve $K$ single-antenna user devices indexed by $\mathcal{K}$ = {1, ... , $K$}, with $N < K$. The base station may utilize one layer RSMA for multi-user transmission. One layer RSMA may perform message splitting at the base station to obtain a single common stream for all of the user devices. Accordingly, an intended message for user device $k$, denoted by $W_k$, may be split into two independent parts, namely a common part $W_{c,k}$ and a private part $W_{p,k}, \forall k \in \mathcal{K}$.

The base station may combine the common parts of user messages into a single common message, denoted by $W_c$. The base station may independently encode the common message $W_c$ and the private message $W_{p,k}$ into streams $s_c$ and $s_k$, respectively. After linear precoding, the base station may transmit the signal as:

$$x = \sqrt{P(1-t)} p_c s_c + \sqrt{Pt} \sum_{k\in\mathcal{K}} \sqrt{\mu_k} p_k s_k, \qquad (1)$$

where $\|p_c\|^2 = 1$, $\|p_k\|^2 = 1$, and $E\{ss^H\} = I$ for $s = [s_c, s_1, ... , s_k]$. A power allocation coefficient $0 \leq t \leq 1$ may determine a distribution of power among a common precoder and private precoders, and a coefficient $\mu_k$ may determine a portion of the total power of private streams allocated to user device $k$. Setting $t = 1$ may turn off the common stream and RSMA may become SDMA.

The signal received by user device $k$ may be written as:

$$y_k = \sqrt{v_k} h_k^H x + n_k, \quad k \in \mathcal{K}, \qquad (2)$$

where $h_k \in C^N$ may be a channel vector representing small scale fading and $0 < v_k \leq 1$ may be a channel coefficient representing large scale fading between the base station and user device $k$. The term $n_k \sim \mathcal{CN}$ (0,1) may be an additive white Gaussian noise (AWGN) component at user device $k$.

Each user device may receive a signal by first decoding the common stream to obtain $\widehat{W_c}$ and extracting $\widehat{W_{c,k}}$ from the decoded signal. Then, each user device may perform SIC by reconstructing the common stream using $\widehat{W_c}$ and removing the reconstructed signal from the received signal. Finally, each user device may decode the private stream and obtain $\widehat{W_{p,k}}$ by treating interference from other user devices' private streams as noise. The entire decoded message of user device k, $\widehat{W_k}$ , may be reconstructed by combining the decoded common part, $\widehat{W_{c,k}}$ , and the decoded private part, $\widehat{W_{p,k}}$ . The signal-to-interference and noise ratio (SINR) for the common stream at user device k may be:

$$\gamma_{c,k} = \frac{P(1-t)v_k|h_k^H p_c|^2}{1+Ptv_k \sum_{j\in\mathcal{K}} \mu_j |h_k^H p_j|^2}. \qquad (3)$$

The SINR for the private stream at user device k may be:

$$\gamma_k = \frac{\mu_k Ptv_k|h_k^H p_k|^2}{1+Ptv_k \sum_{j\in\mathcal{K},j\neq k} \mu_j |h_k^H p_j|^2}. \qquad (4)$$

Then, the ergodic rates of the common and private streams may be expressed as:

$$R_c(t) = E\left\{\log_2\left(1 + \min_{k\in\mathcal{K}}\gamma_{c,k}\right)\right\}, \quad R_k(t) = E\{\log_2(1 + \gamma_k)\}, \qquad (5)$$

where expectations are defined over user channels $h_k$. The precoders $p_c$ and $p_k$ may be calculated based on CSIT, which is imperfect in practical scenarios. The imperfections in CSIT may stem from numerous causes, such as channel estimation errors, finite-length CSI feedback, mobility and latency in the network, pilot contamination, and/or the like.

A general model may be utilized to represent a relation between an actual channel and CSIT for analytical calculations with different types of CSIT errors. Accordingly, a small scale fading component of the channel for user device k may be expressed as:

$$h_k = \sqrt{\epsilon^2}\widehat{h_k} + \sqrt{1 - \epsilon^2}e_k, \qquad (6)$$

where $h_k$ denotes a spatially uncorrelated Rayleigh flat fading channel with independent, identically distributed entries distributed according to $\mathcal{CN}$ (0, 1). The large scale fading effect for the overall channel of user device k may be captured by a coefficient $v_k$, thus, identical small scale fading variance may be assumed for all user devices. The terms $\widehat{h_k}$ and $e_k$ may be independent random variables denoting CSIT and a CSIT error, respectively, both with independent, identically distributed entries also distributed according to $\mathcal{CN}$ (0, 1). The coefficient $0 \le \epsilon \le 1$ may represent the CSIT quality and may be dependent on various parameters in practical systems, such as SNR, user speed, quantity of quantization bits for feedback, and/or the like, depending on a scenario.

In some implementations, the base station may utilize a maximum-minimum fairness optimization to ensure a non-zero ergodic rate for each user device, as follows:

$$\max_{P,c,\mu,t} \min_{k\in\mathcal{K}} C_k(t) + R_k(t), \qquad (7)$$

where $C_k(t)$ may be a portion of the common stream rate allocated to user device k, $c = [C_1, C_2, ..., C_K]$, $P = [p_c, p_1, p_2, ..., p_K]$, and $\mu = [\mu_1, \mu_2, ..., \mu_K]$.

The base station may obtain a low-complexity design as a solution to equation (7). The solution may be simplified by limiting the design space for optimal precoders. Accordingly, two types of precoders, specifically zero-forcing (ZF) precoding and maximum ratio transmission (MRT) precoding, may be used for transmission of private streams. The type of employed precoders affect the expressions for the rates $C_k(t)$ and $R_k(t)$, which in turn affect the system design and resource allocation. Limiting the design space for precoders enables the base station to formulate separate problem formulations for different types of precoders employed. $C_k^{\mathrm{ZF}}(t)$ and $R_k^{\mathrm{ZF}}(t)$ may denote the portion of the common stream rate and the private stream rate for user device k, respectively, achieved when ZF precoders are used for private streams, and $C_k^{\mathrm{MRT}}(t)$ and $R_k^{\mathrm{MRT}}(t)$ may denote the respective rates when MRT precoders are used for private streams. Equation (7) may be reformulated as:

$$\max\left(\max_{c,\mu,t}\min_{k\in\mathcal{K}} C_k^{\mathrm{ZF}}(t) + R_k^{\mathrm{ZF}}(t),\ \max_{c,\mu,t}\min_{k\in\mathcal{K}} C_k^{\mathrm{MRT}}(t) + R_k^{\mathrm{MRT}}(t)\right). \quad (8)$$

For ZF decoding, a DoF analysis may reveal that the optimal maximum-minimum DoF is achieved by serving *N* user devices by private streams with ZF precoding and a portion of the common stream, while the remaining *K - N* users are served by a portion of the common stream. To this end, user groups $\mathcal{G}_1$ and $\mathcal{G}_2$ may be defined and may satisfy

$$|\mathcal{G}_1| = N,\ |\mathcal{G}_2| =$$

*K - N,*

$$\mathcal{G}_1 \cap \mathcal{G}_2,$$

and

$$\mathcal{G}_1 \cup \mathcal{G}_2 = \mathcal{K}.$$

A set $\mathcal{G}_1$ may denote an index set for user devices which are served by private and common streams, while $\mathcal{G}_2$ may denote an index set for user devices served by a common stream only. Assuming equal power allocation among the private streams may provide:

$$\mu_k = \begin{cases} \frac{1}{N}, if\ k\ \in \mathcal{G}_1, \\ 0, if\ k \in \mathcal{G}_2. \end{cases} \quad (9)$$

The base station may define a rate allocation coefficient, $0 \leq \beta < \frac{1}{N}$, to denote a proportion of the common stream rate allocated to each user device in $\mathcal{G}_1$. Accordingly, equation (7) may be reformulated as:

$$\max_{\beta\in[0,1/N),t\in[0,1)}\ \min_{k\in\mathcal{G}_1}\left\{\beta R_c^{\mathrm{ZF}}(t) + R_k^{\mathrm{ZF}}(t), \frac{1-N\beta}{K-N} R_c^{\mathrm{ZF}}(t)\right\}. \quad (10)$$

The first term in the brackets in equation (10) may represent a total rate allocated to user devices in $\mathcal{G}_1$ and the second term in the brackets in equation (10) may represent a rate allocated to user devices in $\mathcal{G}_2$. Defining

$$\tilde{k} = argmin_{k \in \mathcal{G}_1} R_{\tilde{k},p}^{ZF}(t),$$

, equation (10) may be expressed in a simpler form as:

$$\max_{\beta \in [0,1/N), t \in [0,1)} \min \left( \beta R_c^{ZF}(t) + R_{\tilde{k}}^{ZF}(t), \frac{1 - N\beta}{K - N} R_c^{ZF}(t) \right). \qquad (11)$$

A ZF precoder for user device k may be denoted as

$$\forall k \in \mathcal{G}_1,$$

such that, $\left| p_k^{ZF} \right|^2 = 1$ and $\widehat{h_j^H} p_k^{ZF} = 0$ for

$$\text{for } \forall j, k \in \mathcal{G}_1$$

and $j \neq k$. Accordingly, the rate expressions in equation (11) may be written explicitly as:

$$R_c^{ZF}(t) = E \left\{ \log_2 \left( 1 + \min_{k \in \mathcal{K}} \frac{P(1-t)v_k |h_k^H p_c|^2}{1 + \frac{Pt}{N} v_k \sum_{j \in \mathcal{G}_1} |h_k^H p_j^{ZF}|^2} \right) \right\},$$

$$R_{\tilde{k}}^{ZF}(t) = E \left\{ \log_2 \left( 1 + \frac{\frac{Pt}{N} v_{\tilde{k}} |h_{\tilde{k}}^H p_{\tilde{k}}^{ZF}|^2}{1 + \frac{Pt}{N} v_{\tilde{k}} \sum_{j \in \mathcal{G}_1, j \neq \tilde{k}} |h_{\tilde{k}}^H p_j^{ZF}|^2} \right) \right\}. \qquad (12)$$

For MRT precoding, each user device may be served by a private stream encoded by MRT precoders and a portion of the common stream. Different from the design for ZF precoding, the user device may not be divided into two groups. Equal power allocation may be assumed among the private streams, such that, $\mu_k = \frac{1}{N}, \forall k \in \mathcal{K}$ and a common rate may be distributed equally among all user devices. Consequently, a rate expression for each user device is identical, and equation (7) becomes:

$$\max_{t \in (0,1]} \frac{1}{K} R_c^{MRT}(t) + R_{\hat{k}}^{MRT}(t). \qquad (13)$$

The MRT precoder for user device k may be written as $p_k^{MRT} = \frac{\widehat{h_k}}{|\widehat{h_k}|}, \forall k \in \mathcal{K}$. The rate expressions in equation (13) may be written explicitly as:

$$R_c^{\mathrm{MRT}}(t) = E\left\{\log_2\left(1 + \min_{k\in\mathcal{K}} \frac{P(1-t)v_k|\boldsymbol{h}_k^H\boldsymbol{p}_c|^2}{1 + \frac{Pt}{K}v_k\sum_{j\in\mathcal{K}}|\boldsymbol{h}_k^H\boldsymbol{p}_j^{\mathrm{MRT}}|^2}\right)\right\},$$

$$R_{\tilde{k}}^{\mathrm{MRT}}(t) = E\left\{\log_2\left(1 + \frac{\frac{Pt}{K}v_{\tilde{k}}\left|\boldsymbol{h}_{\tilde{k}}^H\boldsymbol{p}_{\tilde{k}}^{\mathrm{MRT}}\right|^2}{1+\frac{Pt}{K}v_{\tilde{k}}\sum_{j\in\mathcal{K},j\neq\tilde{k}}\left|\boldsymbol{h}_{\tilde{k}}^H\boldsymbol{p}_j^{\mathrm{MRT}}\right|^2}\right)\right\}, \qquad (14)$$

where $\boldsymbol{p}_k^{\mathrm{MRT}}$ may denote the MRT precoder for user device $k$, $\forall k \in \mathcal{K}$. With the simplified formulations in equations (11) and (13), equation (7) becomes:

$$\max\left(\max_{\beta\in[0,1/N),t\in[0,1)} \min\left(\beta R_c^{\mathrm{ZF}}(t) + R_{\tilde{k}}^{\mathrm{ZF}}(t), \frac{1-N\beta}{K-N}R_c^{\mathrm{ZF}}(t)\right), \max_{t\in(0,1]} \frac{1}{K}R_c^{\mathrm{MRT}}(t) + R_{\hat{k}}^{\mathrm{MRT}}(t)\right). \quad (15)$$

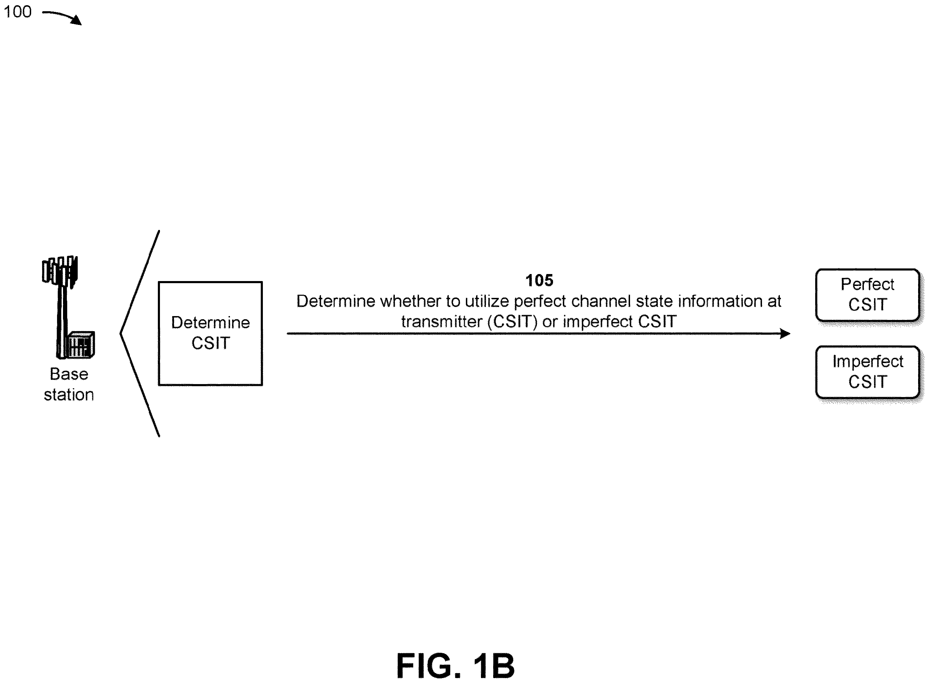

As shown in Fig. 1B, and by reference number 105, the base station may determine whether to utilize perfect CSIT or imperfect CSIT. For example, the base station may determine an optimal precoder and resource allocation for equation (15) with perfect CSIT and imperfect CSIT. Thus, the base station may determine whether to utilize perfect CSIT or imperfect CSIT when determining the optimal precoder and resource allocation for equation (15). In some implementations, the base station may determine to utilize perfect CSIT when determining the optimal precoder and resource allocation for equation (15). Alternatively, the base station may determine to utilize imperfect CSIT when determining the optimal precoder and resource allocation for equation (15). In some implementations, when determining whether to utilize perfect CSIT or imperfect CSIT, the base station may determine whether to utilize perfect CSIT or imperfect CSIT based on one or more of channel estimation errors, finite-length CSI feedback, user device mobility, latency, pilot contamination, and/or the like associated with the base station. In some implementations, the base station may utilize any precoder for the common stream $\boldsymbol{p}_{p,c}$.

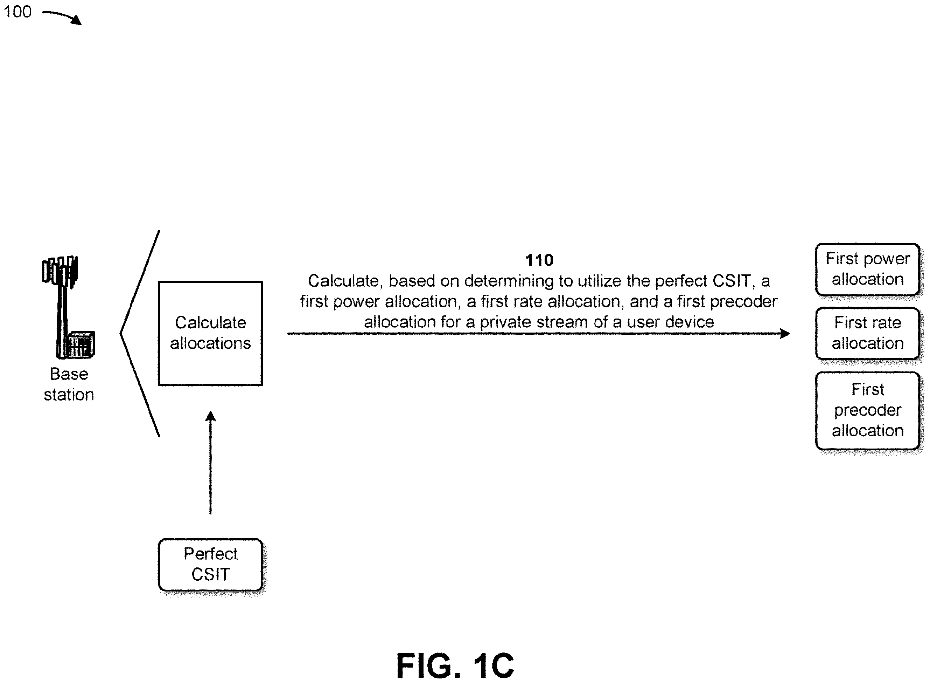

As shown in Fig. 1C, and by reference number 110, the base station may calculate, based on determining to utilize the perfect CSIT, a first power allocation, a first rate allocation, and a first precoder allocation for a private stream of a user device. For example, when the base station determines to utilize perfect CSIT, the base station may calculate a first power allocation $t_p$, a first rate allocation $\beta_p$, and a first precoder allocation for the private stream of user device $k$, $\boldsymbol{p}_{p,k}$, as follows:

$$\hat{n} = \arg max_{n\in 1,2,\dots,5}\, r_{mm,p}^{(n)}, \quad t_p = t_p^{(\hat{n})}, \beta_p = 0,$$

$$\boldsymbol{p}_{p,k}^* = \begin{cases} \boldsymbol{p}_{p,k}^{(ZF)}, if\ \hat{n} \leq 3\ and\ k \in \mathcal{G}_1, \\ 0, if\ \hat{n} \leq 3\ and\ k \in \mathcal{G}_2, \\ \boldsymbol{p}_{p,k}^{(MRT)}, if\ \hat{n} \geq 4, k \in \mathcal{K}, \end{cases} \quad (16)$$

where

$$t_p^{(1)} \triangleq \min\left\{t_p^{(1)}(0), 1\right\} = \min\left\{\left(\frac{\rho_p^{\mathrm{ZF}}}{(\sigma_{\tilde{k},p}^{\mathrm{ZF}})^{K-N}}\right)^{\frac{1}{1+K-N}}, 1\right\},$$

$$\beta_p^{(1)} = 0, \quad r_{c,p}^{(1)} \triangleq \log_2\left(1 - \rho_p^{\mathrm{ZF}} + \frac{\rho_p^{\mathrm{ZF}}}{t_p^{(1)}}\right),$$

$$r_{\tilde{k},p}^{(1)} \triangleq \log_2\left(1 + \sigma_{\tilde{k},p}^{\mathrm{ZF}} t_p^{(1)}\right), \quad r_{mm,p}^{(1)} \triangleq \min\left\{\frac{r_{c,p}^{(1)}}{K-N}, r_{\tilde{k},p}^{(1)}\right\}.$$

$$t_p^{(2)} = \begin{cases} \frac{\log\left(\delta_p^{(2)}\rho_p^{\mathrm{ZF}}\right) - \log\left(\log\left(\delta_p^{(2)}\rho_p^{\mathrm{ZF}}\right)\right)}{\delta_p^{(2)}}, & \text{if } \delta_p^{(2)}\rho_p^{\mathrm{ZF}} \geq e \\ 1 & , \text{otherwise.} \end{cases}, \quad \beta_p^{(2)} = 0, \quad r_{c,p}^{(2)} \triangleq \log_2\left(1 - \rho_p^{\mathrm{ZF}} + \frac{\rho_p^{\mathrm{ZF}}}{t_p^{(2)}}\right),$$

$$r_{\tilde{k},p}^{(2)} \triangleq \log_2\left(1 + \sigma_{\tilde{k},p}^{\mathrm{ZF}} t_p^{(2)}\right), \quad r_{mm,p}^{(2)} \triangleq \min\left\{\frac{r_{c,p}^{(2)}}{K-N}, r_{\tilde{k},p}^{(2)}\right\}.$$

$$t_p^{(3)} \triangleq \frac{-b_{3,p} + \sqrt{b_{3,p}^2 - 4a_{3,p}c_{3,p}}}{2a_{3,p}}, \quad \beta_p^{(3)} = 0,$$

$$r_{c,p}^{(3)} \triangleq \log_2\left(1 + \frac{Ne^{-\gamma}P(1 - t_p^{(3)})}{PN(K-N+1)t_p^{(3)} + N\sum_{k=1}^{K} 1/v_k}\right),$$

$$r_{\tilde{k},p}^{(3)} \triangleq \log_2\left(1 + \sigma_{\tilde{k},p}^{\mathrm{ZF}} t_p^{(3)}\right), \quad r_{mm,p}^{(3)} \triangleq \min\left\{\frac{r_{c,p}^{(3)}}{K-N}, r_{\tilde{k},p}^{(3)}\right\}. \tag{17}$$

In some implementations, when calculating the first power allocation, the first rate allocation, and the first precoder allocation for the private stream of the user device, the base station may utilize a maximum-minimum fairness optimization to calculate the first power allocation, the first rate allocation, and the first precoder allocation for the private stream of the user device.

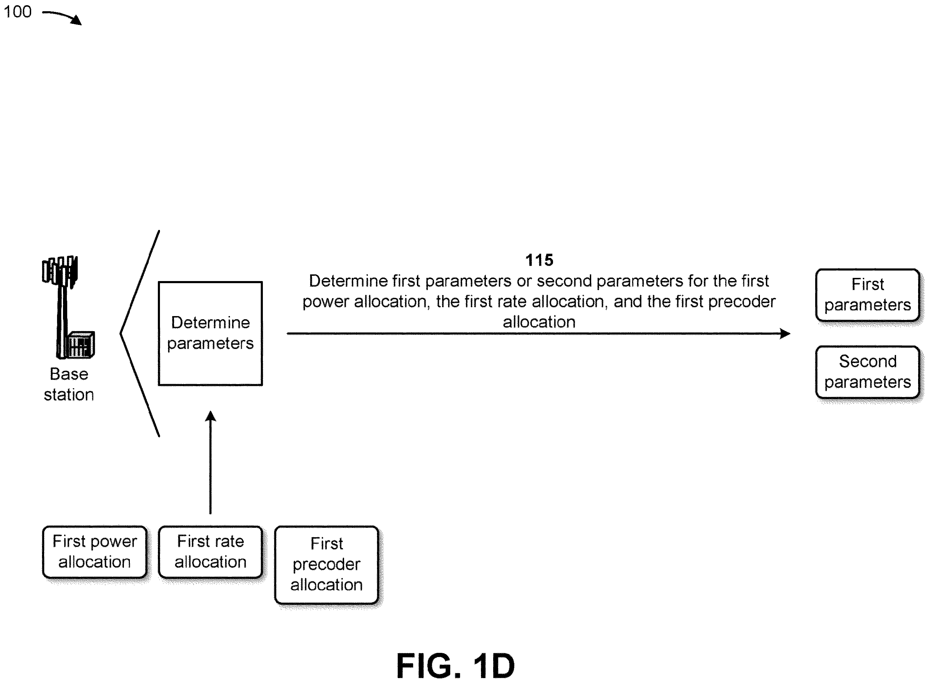

As shown in Fig. 1D, and by reference number 115, the base station may determine first parameters or second parameters for the first power allocation, the first rate allocation, and the first precoder allocation. For example, the base station may determine the first parameters for the first power allocation, the first rate allocation, and the first precoder allocation, as follows:

$$t_p^{(4/5)} \triangleq \begin{cases} \min\left\{1, \frac{-b_{1,p} \pm \sqrt{b_{1,p}^2 + 4a_{1,p}}}{2a_{1,p}}\right\}, & \text{if } \sqrt{b_{1,p}^2 + 4a_{1,p}} \geq 0, b_{1,p} \geq 0, \\ 1 & , \text{otherwise,} \end{cases},$$

$$r_{mm,p}^{(4/5)} \triangleq \frac{1}{K}\log_2\left(1 - \rho_p^{\mathrm{MRT}} + \frac{\rho_p^{\mathrm{MRT}}}{t_p^{(4/5)}}\right) + \log_2\left(\frac{1 + \alpha_p^{\mathrm{MRT}} t_p^{(4/5)}}{1 + \beta_p^{\mathrm{MRT}} t_p^{(4/5)}}\right). \tag{18}$$

Alternatively, the base station may determine the second parameters for the first power allocation, the first rate allocation, and the first precoder allocation, as follows:

$$t_p^{(4/5)} \triangleq \begin{cases} \min\left\{1, \frac{-b_{2,p} \pm \sqrt{b_{2,p}^2 - 4a_{2,p}c_{2,p}}}{2a_{2,p}}\right\}, \text{ if } \sqrt{b_{2,p}^2 - 4a_{2,p}c_{2,p}} \geq 0, \frac{-b_{2,p} \pm \sqrt{b_{2,p}^2 - 4a_{2,p}c_{2,p}}}{2a_{2,p}} \geq 0 \\ \qquad\qquad\qquad 1 \qquad\qquad\qquad , \text{ otherwise.} \end{cases}$$

$$r_{mm,p}^{(4/5)} \triangleq \frac{1}{K}\log_2\left(1 + \frac{Pe^{-\gamma}(1 - t_p^{(4/5)})}{(N+K-1)Pt_p^{(4/5)} + \sum_{k=1}^{K}\frac{1}{v_k}}\right) + \log_2\left(\frac{1 + \alpha_p^{\mathrm{MRT}}t_p^{(4/5)}}{1 + \beta_p^{\mathrm{MRT}}t_p^{(4/5)}}\right). \tag{19}$$

The parameters in equations (17) through (19) may be defined as: $\sigma_{\tilde{k},p}^{\mathrm{ZF}} = v_{\tilde{k}}\frac{P}{N}e^{\psi(1)}$, $\tilde{k} =$

$argmin_{k \in \mathcal{G}_1} v_k$, $\rho_p^{\mathrm{ZF}} = \frac{N}{\lfloor N(K-N+1)\rfloor - 1}e^{-\gamma - \frac{1}{2(\lfloor N(K-N+1)\rfloor - 1)}}$, $\delta_p^{(2)} = \log(2)(K-N)\sigma_{\tilde{k},p}^{\mathrm{ZF}}$, $a_{3,p} =$

$P(K-N+1)(K-N)\sigma_{\tilde{k},p}^{\mathrm{ZF}}$, $b_{3,p} = \left((K-N)\sigma_{\tilde{k},p}^{\mathrm{ZF}}\sum_{k=1}^{K}1/v_k + e^{-\gamma}P\right)$, $c_{3,p} = -e^{-\gamma}P$, $\rho_p^{\mathrm{MRT}} =$

$\frac{K}{(\lfloor(N+K-1)K\rfloor - 1)}e^{-\gamma - \frac{1}{2(\lfloor(N+K-1)K\rfloor - 1)}}$, $\alpha_p^{\mathrm{MRT}} = v_{\hat{k}}\frac{P}{K}e^{\psi(N+K-1)}$, $\beta_p^{\mathrm{MRT}} = v_{\hat{k}}\frac{P(K-1)}{K}$,

,and $\hat{k} = argmin_{k \in \mathcal{K}} v_k$ .

In some implementations, when determining the first parameters or the second parameters for the first power allocation, the first rate allocation, and the first precoder allocation, the base station may determine the first parameters for the first power allocation, the first rate allocation, and the first precoder allocation when the base station is configured with first settings (e.g., based on a first scenario for the base station). Alternatively, the base station may determine the second parameters for the first power allocation, the first rate allocation, and the first precoder allocation when the base station is configured with second settings, different than the first settings (e.g., based on a second scenario for the base station). In some implementations, the base station may remove one or more of the first parameters and/or one or more of the second parameters to limit a quantity of candidate allocations and conserve computing resources.

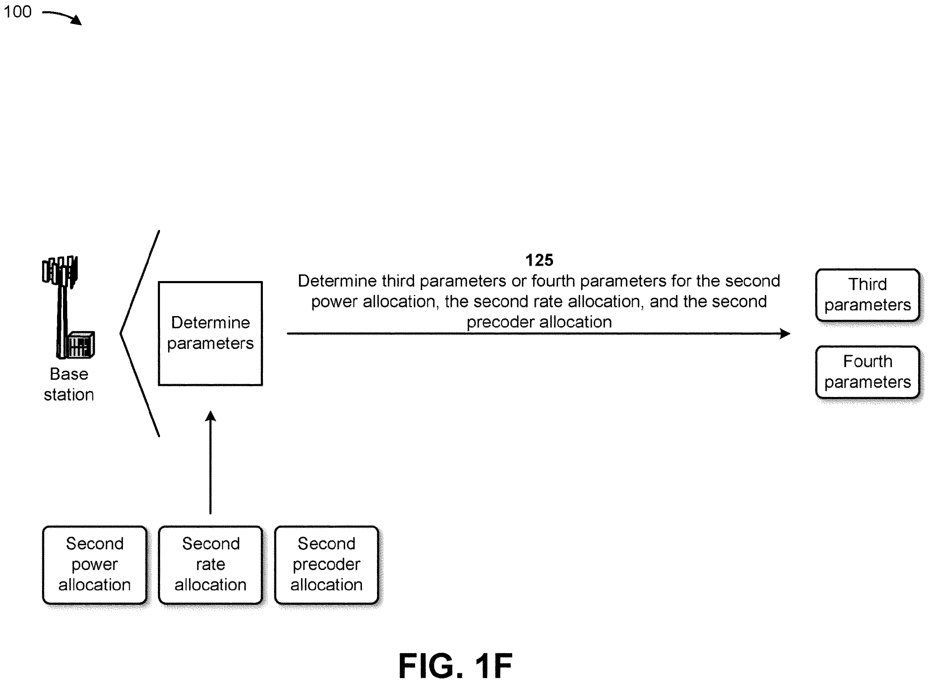

As shown in Fig. 1F, and by reference number 120, the base station may calculate, based on determining to utilize the imperfect CSIT, a second power allocation, a second rate allocation, and a second precoder allocation for the private stream of the user device. For example, when the base station determines to utilize imperfect CSIT, the base station may calculate a second power allocation $t_i$, a second rate allocation $\beta_i$, and a second precoder allocation for the private stream of user device $k$, $p_{i,k}$, as follows:

$$\hat{n} = \arg\max_{n \in \{1,2,\dots,6\}} r_{mm,i}^{(n)}, \quad \mathbf{p}_{i,k}^* = \begin{cases} \mathbf{p}_{i,k}^{(\mathrm{ZF})}, \text{ if } \hat{n} \leq 4 \ \& \ k \in \mathcal{G}_1, \\ 0 \ , \text{ if } \hat{n} \leq 4 \ \& \ k \in \mathcal{G}_2, \\ \mathbf{p}_{i,k}^{(\mathrm{MRT})}, \text{ if } \hat{n} \geq 5 \ \& \ k \in \mathcal{K}, \end{cases} t_i = t_i^{(\hat{n})}, \quad \beta_i = \begin{cases} \beta_i^{(\hat{n})}, \text{ if } \hat{n} \leq 4, \\ \mathrm{N/A}, \text{ otherwise.} \end{cases} \tag{20}$$

where

$$t_i^{(1)} \triangleq \min\left\{\frac{\rho_i^{\mathrm{ZF}}}{\left(\frac{\sigma_{\tilde{k},i}^{\mathrm{ZF}}}{\nu_{\tilde{k},i}^{\mathrm{ZF}}}\right)^{\frac{K-N}{1-K\beta_i^{(1)}}}}, 1\right\}, \quad \beta_i^{(1)} \triangleq \max\left\{\frac{1}{K} - \frac{(K-N)\log\left(\frac{\sigma_{\tilde{k},i}^{\mathrm{ZF}}}{\nu_{\tilde{k},i}^{\mathrm{ZF}}}\right)}{K\log\left(\nu_{\tilde{k},i}^{\mathrm{ZF}}\rho_i^{\mathrm{ZF}}\right)}, 0\right\},$$

$$r_{c,i}^{(1)} \triangleq \log_2\left(1 - \rho_i^{\mathrm{ZF}} + \frac{\rho_i^{\mathrm{ZF}}}{t_i^{(1)}}\right), \quad r_{\tilde{k},i}^{(1)} \triangleq \log_2\left(\frac{1 + \sigma_{\tilde{k},i}^{\mathrm{ZF}} t_i^{(1)}}{1 + \nu_{\tilde{k},i}^{\mathrm{ZF}} t_i^{(1)}}\right),$$

$$r_{mm,p}^{(1)} \triangleq \min\left\{\frac{1 - N\beta_i^{(1)}}{K - N} r_{c,i}^{(1)}, \quad \beta_i^{(1)} r_{c,i}^{(1)} + r_{\tilde{k},i}^{(1)}\right\}.$$

$$t_i^{(2)} \triangleq \begin{cases} \dfrac{\log\left(\frac{\delta_i^{(2)} \rho_i^{\mathrm{ZF}}}{1-\varepsilon}\right) - \log\left(\log\left(\frac{\delta_i^{(2)} \rho_i^{\mathrm{ZF}}}{1-\varepsilon}\right)\right)}{\frac{\delta_i^{(2)}}{1-\varepsilon}}, & \text{if } \frac{\delta_i^{(2)} \rho_i^{\mathrm{ZF}}}{1-\varepsilon} \geq e \ \& \ Pt_i^{(2)}\left(\varepsilon\frac{1}{K}\right) \geq \lambda \\ 1 & , \text{ otherwise.} \end{cases} \quad \beta_i^{(2)} = \varepsilon\frac{1}{K},$$

$$r_{c,i}^{(2)} \triangleq \log_2\left(1 - \rho_i^{\mathrm{ZF}} + \frac{\rho_i^{\mathrm{ZF}}}{t_i^{(2)}}\right), \quad r_{\tilde{k},i}^{(2)} \triangleq \log_2\left(\frac{1 + \sigma_i^{\mathrm{ZF}} t_i^{(2)}}{1 + \nu_i^{\mathrm{ZF}} t_i^{(2)}}\right), \quad r_{mm,p}^{(2)} \triangleq \min\left\{\frac{1 - N\beta_i^{(2)}}{K - N} r_{c,i}^{(2)}, \quad \beta_i^{(2)} r_{c,i}^{(2)} + r_{\tilde{k},i}^{(2)}\right\}.$$

$$t_i^{(3)} \triangleq \min\left\{\frac{\left(\rho_i^{\mathrm{ZF}}\right)^{\frac{1-K\beta_i^{(3)}}{1+K\beta_i^{(3)}+K-N}}}{\left(\sigma_{\tilde{k},i}^{\mathrm{ZF}}\right)^{\frac{K-N}{1-K\beta_i^{(3)}+K-N}}}, 1\right\}, \quad \beta_i^{(3)} \triangleq \begin{cases} 0, & \text{if } \sigma_{\tilde{k},i}^{\mathrm{ZF}} \rho_i^{\mathrm{ZF}} > 1 \\ \varepsilon\frac{1}{K}, & \text{otherwise.} \end{cases}$$

$$r_{c,i}^{(3)} \triangleq \log_2\left(1 - \rho_i^{\mathrm{ZF}} + \frac{\rho_i^{\mathrm{ZF}}}{t_i^{(3)}}\right), \quad r_{\tilde{k},i}^{(3)} \triangleq \log_2\left(\frac{1 + \sigma_{\tilde{k},i}^{\mathrm{ZF}} t_i^{(3)}}{1 + \nu_{\tilde{k},i}^{\mathrm{ZF}} t_i^{(3)}}\right),$$

$$r_{mm,p}^{(3)} \triangleq \min\left\{\frac{1 - N\beta_i^{(3)}}{K - N} r_{c,i}^{(3)}, \quad \beta_i^{(3)} r_{c,i}^{(3)} + r_{\tilde{k},i}^{(3)}\right\}.$$

$$t_i^{(4)} \triangleq \begin{cases} 1 - \dfrac{\log\left(\frac{\delta_i^{(2)} \sum_{k=1}^{K} \frac{1}{v_k}}{e^{-\gamma P}} e^{\delta_i^{(2)}}\right) - \log\left(\log\left(\frac{\delta_i^{(2)} \sum_{k=1}^{K} \frac{1}{v_k}}{e^{-\gamma P}} e^{\delta_i^{(2)}}\right)\right)}{\delta_i^{(2)}}, & \text{if } \frac{\delta_i^{(2)} \sum_{k=1}^{K} \frac{1}{v_k}}{(1-K\beta^*)e^{-\gamma P}} \geq e \ \& \ Pt_i^{(4)}\left(\varepsilon\frac{1}{K}\right) \geq \lambda, \quad \beta^{(4)} = 0, \\ 1 & , \text{ otherwise.} \end{cases}$$

$$r_{c,i}^{(4)} \triangleq \log_2\left(1 + \frac{Ne^{-\gamma}P(1 - t_i^{(4)})}{P\lfloor N(N - K + D_i^{\mathrm{ZF}})\rfloor t_i^{(4)} + N\sum_{k=1}^{K}\frac{1}{v_k}}\right), \quad r_{\tilde{k},i}^{(4)} \triangleq \log_2\left(1 + \sigma_{\tilde{k},i}^{\mathrm{ZF}} t_i^{(4)}\right), \quad r_{mm,i}^{(4)} \triangleq \min\left\{\frac{r_{c,i}^{(4)}}{K - N}, r_{\tilde{k},i}^{(4)}\right\}. \tag{21}$$

In some implementations, when calculating the second power allocation, the second rate allocation, and the second precoder allocation for the private stream of the user device, the base station may utilize a maximum-minimum fairness optimization to calculate the second power allocation, the second rate allocation, and the second precoder allocation for the private stream of the user device.

As shown in Fig. 1F, and by reference number 125, the base station may determine third parameters or fourth parameters for the second power allocation, the second rate allocation, and the second precoder allocation. For example, the base station may determine the third parameters for the second power allocation, the second rate allocation, and the second precoder allocation, as follows:

$$t_i^{(5/6)} \triangleq \begin{cases} \min\left\{1, \frac{-b_{1,i} \pm \sqrt{b_{1,i}^2 + 4a_{1,i}}}{2a_{1,i}}\right\}, & \text{if } \sqrt{b_{1,i}^2 + 4a_{1,i}} \geq 0, \ \frac{-b_{1,i} \pm \sqrt{b_{1,i}^2 + 4a_{1,i}}}{2a_{1,i}} \geq 0 \\ 1 & , \text{ otherwise.} \end{cases}$$

$$r_{mm,p}^{(5/6)} \triangleq \frac{1}{K} \log_2\left(1 - \rho_i^{\mathrm{MRT}} + \frac{\rho_i^{\mathrm{MRT}}}{t_i^{(5/6)}}\right) + \log_2\left(\frac{1 + \alpha_i^{\mathrm{MRT}} t_i^{(5/6)}}{1 + \beta_i^{\mathrm{MRT}} t_i^{(5/6)}}\right).$$

$$(22)$$

Alternatively, the base station may determine the fourth parameters for the second power allocation, the second rate allocation, and the second precoder allocation, as follows:

$$t_i^{(5/6)} \triangleq \begin{cases} \min\left\{1, \frac{-b_{2,i} \pm \sqrt{b_{2,i}^2 - 4a_{2,i}c_{2,i}}}{2a_{2,i}}\right\}, & \text{if } \sqrt{b_{2,i}^2 - 4a_{2,i}c_{2,i}} \geq 0, \ \frac{-b_{2,i} \pm \sqrt{b_{2,i}^2 - 4a_{2,i}c_{2,i}}}{2a_{2,i}} \geq 0 \\ 1 & , \text{ otherwise.} \end{cases}$$

$$r_{mm,p}^{(5/6)} \triangleq \frac{1}{K} \log_2\left(1 + \frac{PKe^{-\gamma}\left(1 - t_i^{(5/6)}\right)}{P\theta_i^{\mathrm{MRT}}\lceil D_i^{\mathrm{MRT}}K \rceil t_i^{(5/6)} + K\sum_{k=1}^{K}\frac{1}{v_k}}\right) + \log_2\left(\frac{1 + \alpha_i^{\mathrm{MRT}} t_i^{(5/6)}}{1 + \beta_i^{\mathrm{MRT}} t_p^{(5/6)}}\right).$$

$$(23)$$

The parameters in equations (21) through (23) may be defined as:

$$\sigma_{\tilde{k},i}^{\mathrm{ZF}} = v_{\tilde{k}}\frac{P}{N}e^{\left(\log(\theta_i^{\mathrm{ZF}}) + \psi(D_i^{\mathrm{ZF}})\right)},$$

$$v_{\tilde{k},i}^{\mathrm{ZF}} = v_{\tilde{k}}\frac{P(N-1)(1-\epsilon^2)}{N}, \ \tilde{k} = argmin_{k \in \mathcal{G}_1} v_k, \ D_i^{\mathrm{ZF}} = \frac{\left(\epsilon^2(1-N)+N\right)^2}{\epsilon^4(1+N)+(1-2\epsilon^2)N}, \ \theta_i^{\mathrm{ZF}} = \frac{\epsilon^4(1+N)+(1-2\epsilon^2)N}{\epsilon^2(1-N)+N},$$

$$\delta_i^{(2)} = \log(2)(K-N)\left(\sigma_{\tilde{k},i}^{\mathrm{ZF}} - v_{\tilde{k},i}^{\mathrm{ZF}}\right), \ \rho_i^{\mathrm{ZF}} = \frac{N}{|N(K-N+D_i^{\mathrm{ZF}})|-1}e^{-\gamma - \frac{1}{2\left(|N(K-N+D_i^{\mathrm{ZF}})|-1\right)}}, \ a_{1,i} =$$

$$-\alpha_i^{\mathrm{MRT}}\beta_i^{\mathrm{MRT}}, \ b_{1,i} = \left[K\left(\alpha_i^{\mathrm{MRT}} - \beta_i^{\mathrm{MRT}}\right) - \left(\alpha_i^{\mathrm{MRT}} + \beta_i^{\mathrm{MRT}}\right)\right], \ \alpha_i^{\mathrm{MRT}} = v_{\hat{k}}\frac{P}{K}e^{\left(\psi(\theta_i^{\mathrm{MRT}}) + \log(D_i^{\mathrm{MRT}})\right)},$$

$$\beta_i^{\mathrm{MRT}} = v_{\hat{k}}\frac{P(K-1)}{K}, \ a_{2,i} = \left(\alpha_i^{\mathrm{MRT}} - \beta_i^{\mathrm{MRT}}\right)\left[\left(P\theta_i^{\mathrm{MRT}}\lceil D_i^{\mathrm{MRT}}K \rceil\right)^2 - P^2\theta_i^{\mathrm{MRT}}\lceil D_i^{\mathrm{MRT}}K \rceil Ke^{-\gamma}\right] -$$

$$\omega_i \alpha_i^{\mathrm{MRT}}\beta_i^{\mathrm{MRT}}, \ b_{2,i} = \left(\alpha_i^{\mathrm{MRT}} - \beta_i^{\mathrm{MRT}}\right)PK\left[\theta_i^{\mathrm{MRT}}\lceil D_i^{\mathrm{MRT}}K \rceil e^{-\gamma} + 2\theta_i^{\mathrm{MRT}}\lceil D_i^{\mathrm{MRT}}K \rceil \sum_{k=1}^{K}\frac{1}{v_k} -$$

$$Ke^{-\gamma \sum_{k=1}^{K}\frac{1}{v_k}}\right] - \omega_i\left(\alpha_i^{\mathrm{MRT}} + \beta_i^{\mathrm{MRT}}\right), \ c_{2,i} = \left(\alpha_i^{\mathrm{MRT}} - \beta_i^{\mathrm{MRT}}\right)K^{2\sum_{k=1}^{K}\frac{1}{v_k}\left(Pe^{-\gamma} + \sum_{k=1}^{K}\frac{1}{v_k}\right)} - \omega_i, \ \omega_i =$$

$$Pe^{-\gamma}\left(P\theta_i^{\mathrm{MRT}}\lceil D_i^{\mathrm{MRT}}K\rceil + K\sum_{k=1}^{K}\frac{1}{v_k}\right).$$

In some implementations, when determining the third parameters or the fourth parameters for the second power allocation, the second rate allocation, and the second precoder allocation, the base station may determine the third parameters for the second power allocation, the second rate allocation, and the second precoder allocation when the base station is configured with third settings (e.g., based on a third scenario for the base station). Alternatively, the base station may determine the fourth parameters for the second power allocation, the second rate allocation, and the second precoder allocation when the base station is configured with fourth settings, different than the third settings (e.g., based on a fourth scenario for the base station). In some implementations, the base station may remove one or more of the third parameters and/or one or more of the fourth parameters to limit a quantity of candidate allocations and conserve computing resources. In some implementations, a parameter $\lambda$ may serve as a design parameter and a parameter $\varepsilon$ may be an arbitrary coefficient $\varepsilon < 1$.

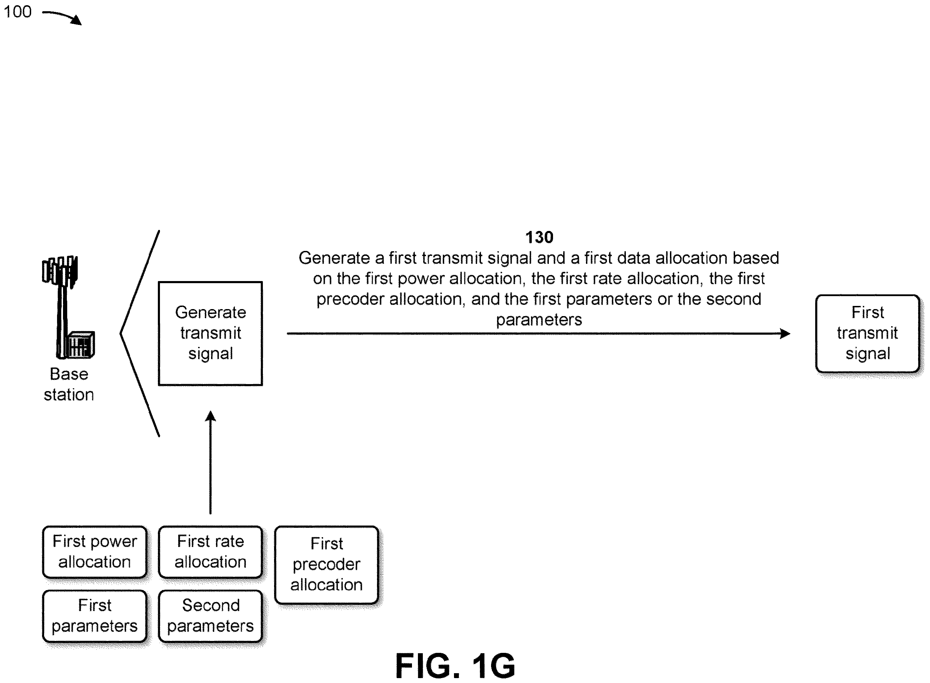

As shown in Fig. 1G, and by reference number 130, the base station may generate a first transmit signal and a first data allocation based on the first power allocation, the first rate allocation, the first precoder allocation, and the first parameters or the second parameters. For example, the base station may utilize the first power allocation, the first rate allocation, the first precoder allocation, and one of the first parameters or the second parameters to generate a first transmit signal to be provided to the user device (e.g., user device $k$) via the private stream. The base station may utilize the first rate allocation to generate a first data allocation for the user device (e.g., user device $k$).

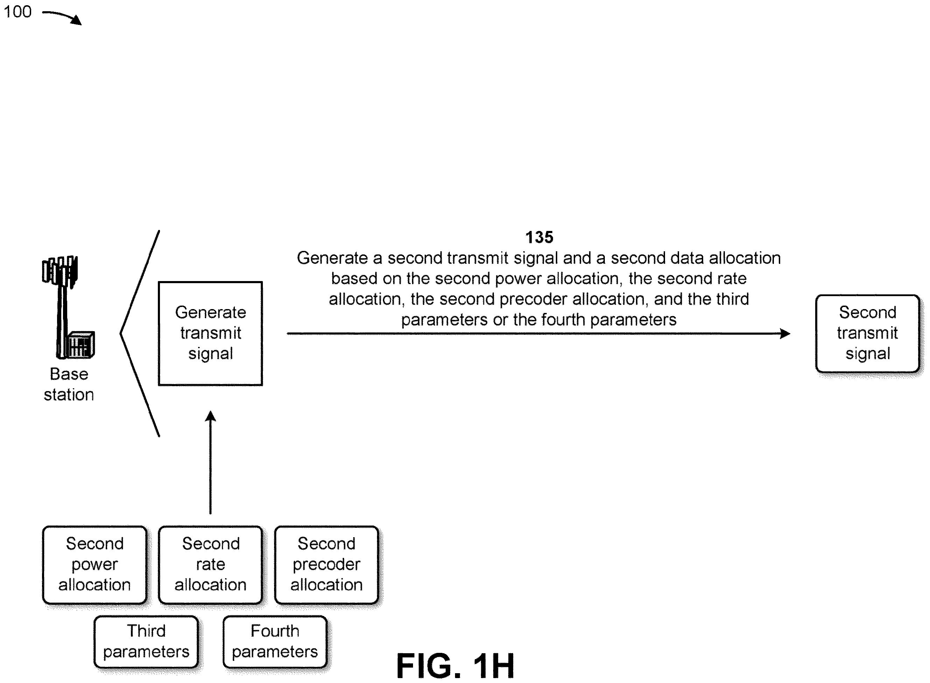

As shown in Fig. 1H, and by reference number 135, the base station may generate a second transmit signal and a second data allocation based on the second power allocation, the second rate allocation, the second precoder allocation, and the third parameters or the fourth parameters. For example, alternatively, the base station may utilize the second power allocation, the second rate allocation, the second precoder allocation, and one of the third parameters or the fourth parameters to generate a second transmit signal to be provided to the user device (e.g., user device $k$) via the private stream. The base station may utilize the second rate allocation to generate a second data allocation for the user device (e.g., user device $k$).

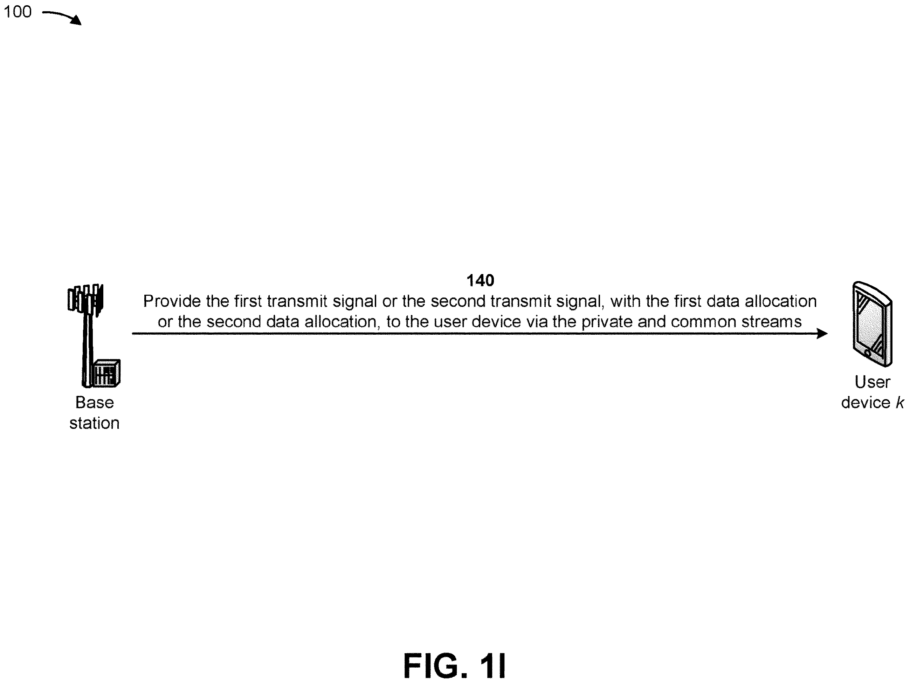

As shown in Fig. 1I, and by reference number 140, the base station may provide the first transmit signal or the second transmit signal, with the first data allocation or the second data allocation, to the user device via the private and common streams. For example, the base station may provide the first transmit signal, with the first data allocation, to the user device (e.g., user device $k$) via the private and common streams. Alternatively, the base station may provide the second transmit signal, with the second data allocation, to the user device (e.g., user device $k$) via the private and common streams.

In some implementation, when providing the first transmit signal, with the first data allocation, to the user device via the private stream, the base station may provide the first transmit signal, with the first data allocation, to the user device via the private stream and in accordance with an RSMA framework. In some implementation, when providing the second transmit signal, with the second data allocation, to the user device via the private stream, the base station may provide the second transmit signal, with the second data allocation, to the user device via the private stream and in accordance with an RSMA framework. In some implementations, the base station may provide a common stream (e.g., in addition to the first transmit signal or the second transmit signal) to the user device (e.g., user device $k$) and to other user devices (e.g., user device 1, user device 2, and/or the like) associated with the base station.

In this way, the base station performs precoder and resource allocation for RSMA in overloaded networks. For example, the base station may include a quantity of transmit antennas that is less than a quantity of the user devices (e.g., overloading the base station). The base station may perform precoder, rate, and power allocation for RSMA to serve the user devices at the same time and may utilize frequency resources from a single transmitter with low complexity. The complexity and latency of the precoder, rate, and power allocation is less than the complexity and latency of obtaining the precoder, rate, and power allocation by an exhaustive search. The performance of RSMA by the base station is greater than several conventional multiple-access schemes with or without user scheduling and with and without perfect CSIT. This, in turn, conserves computing resources, networking resources, and/or the like that would otherwise have been consumed in performing unnecessary and computationally intensive decoding operations, performing an unnecessary descrambling operation, performing an exhaustive search for a scrambling sequence initialization vector, and/or the like.

As indicated above, Figs. 1A-1I are provided as an example. Other examples may differ from what is described with regard to Figs. 1A-1I. The number and arrangement of devices shown in Figs. 1A-1I are provided as an example. In practice, there may be additional devices, fewer devices, different devices, or differently arranged devices than those shown in Figs. 1A-1I. Furthermore, two or more devices shown in Figs. 1A-1I may be implemented within a single device, or a single device shown in Figs. 1A-1I may be implemented as multiple, distributed devices. Additionally, or alternatively, a set of devices (e.g., one or more devices) shown in Figs. 1A-1I may perform one or more functions described as being performed by another set of devices shown in Figs. 1A-1I.

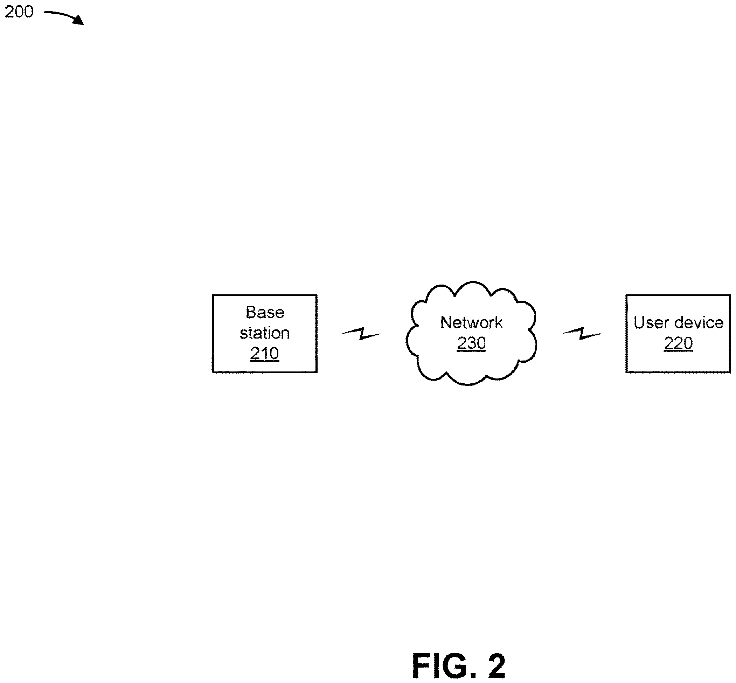

Fig. 2 is a diagram of an example environment 200 in which systems and/or methods described herein may be implemented. As shown in Fig. 2, the environment 200 may include a base station 210, a user device 220, and/or a network 230. Devices and/or elements of the environment 200 may interconnect via wired connections and/or wireless connections.

The base station 210 may support, for example, a cellular radio access technology (RAT). The base station 210 may include one or more base stations (e.g., base transceiver stations, radio base stations, node Bs, eNodeBs (eNBs), gNodeBs (gNBs), base station subsystems, cellular sites, cellular towers, access points, transmit receive points (TRPs), radio access nodes, macrocell base stations, microcell base stations, picocell base stations, femtocell base stations, or similar types of devices) and other network entities that can support wireless communication for a user device 220. The base station 210 may transfer traffic between a user device 220 (e.g., using a cellular RAT), one or more base stations (e.g., using a wireless interface or a backhaul interface, such as a wired backhaul interface), and/or a core network. The base station 210 may provide one or more cells that cover geographic areas.

In some implementations, the base station 210 may perform scheduling and/or resource management for a user device 220 covered by the base station 210 (e.g., a user device 220 covered by a cell provided by the base station 210). In some implementations, the base station 210 may be controlled or coordinated by a network controller, which may perform load balancing, network-level configuration, and/or other operations. The network controller may communicate with the base station 210 via a wireless or wireline backhaul. In some implementations, the base station 210 may include a network controller, a self-organizing network (SON) module or component, or a similar module or component. In other words, the base station 210 may perform network control, scheduling, and/or network management functions (e.g., for uplink, downlink, and/or sidelink communications of a user device 220 covered by the base station 210).

The user device 220 may include one or more devices capable of receiving, generating, storing, processing, and/or providing information, as described elsewhere herein. The user device 220 may include a communication device and/or a computing device. For example, the user device 220 may include a wireless communication device, a mobile phone, a user equipment, a laptop computer, a tablet computer, a desktop computer, a gaming console, a set-top box, a IoT device, a wearable communication device (e.g., a smart wristwatch, a pair of smart eyeglasses, a head mounted display, or a virtual reality headset), or a similar type of device.

The network 230 may include one or more wired and/or wireless networks. For example, the network 230 may include a cellular network (e.g., a fifth generation (5G) network, a fourth generation (4G) network, a long-term evolution (LTE) network, a third generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, and/or a combination of these or other types of networks. The network 230 enables communication among the devices of environment 200.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

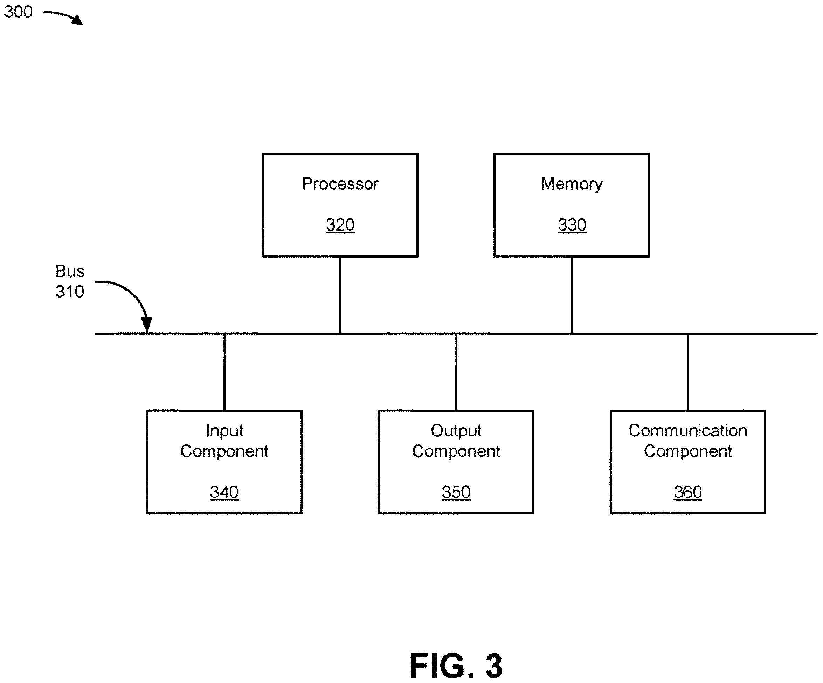

Fig. 3 is a diagram of example components of a device 300, which may correspond to the base station 210 and/or the user device 220. In some implementations, the base station 210 and/or the user device 220 may include one or more devices 300 and/or one or more components of the device 300. As shown in Fig. 3, the device 300 may include a bus 310, a processor 320, a memory 330, an input component 340, an output component 350, and a communication interface 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit, a graphics processing unit, a microprocessor, a controller, a microcontroller, a digital signal processor, a field-programmable gate array, an application-specific integrated circuit, and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g.,

RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication interface 360 enables the device 300 to communicate with other devices via a wired connection and/or a wireless connection. For example, the communication interface 360 may include a receiver, a transmitter, a transceiver, a modem, a network interface card, and/or an antenna.

The device 300 may perform one or more operations or processes described herein. For example, a non-transitory computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

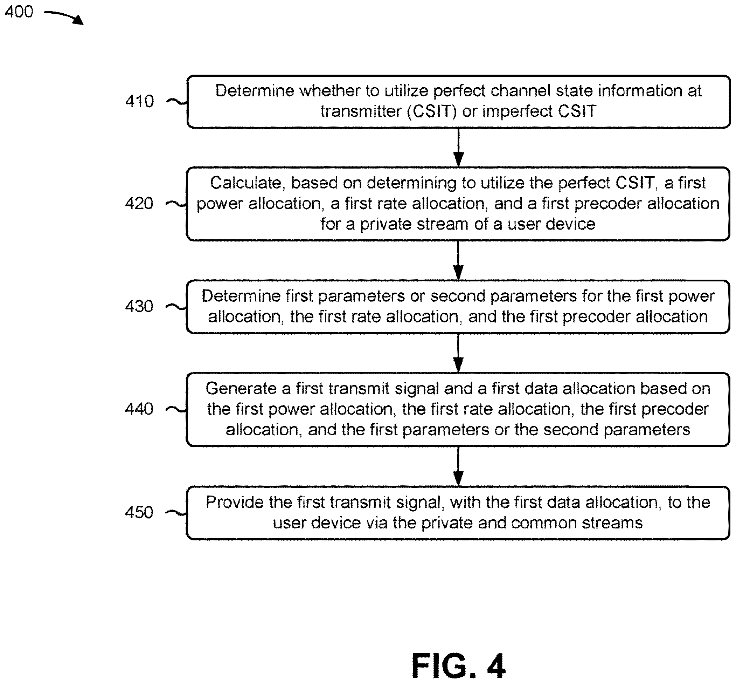

Fig. 4 is a flowchart of an example process 400 for precoder and resource allocation for RSMA in overloaded networks. In some implementations, one or more process blocks of Fig. 4 may be performed by a device (e.g., the base station 210). In some implementations, one or more process blocks of Fig. 4 may be performed by another device or a group of devices separate from or including the device. Additionally, or alternatively, one or more process blocks of Fig. 4 may be performed by one or more components of the device 300, such as the processor 320, the memory 330, the input component 340, the output component 350, and/or the communication interface 360.

As shown in Fig. 4, process 400 may include determining whether to utilize perfect CSIT or imperfect CSIT (block 410). For example, the device may determine whether to utilize perfect CSIT or imperfect CSIT, as described above. In some implementations, determining whether to utilize perfect CSIT or imperfect CSIT includes determining whether to utilize perfect CSIT or imperfect CSIT based on one or more of channel estimation errors, finite-length CSI feedback, user device mobility, latency, or pilot contamination associated with the device.

As further shown in Fig. 4, process 400 may include calculating, based on determining to utilize the perfect CSIT, a first power allocation, a first rate allocation, and a first precoder allocation for a private stream of a user device (block 420). For example, the device may calculate, based on determining to utilize the perfect CSIT, a first power allocation, a first rate allocation, and a first precoder allocation for a private stream of a user device, as described above. In some implementations, calculating the first power allocation, the first rate allocation, and the first precoder allocation for the private stream of the user device includes utilizing a maximum-minimum fairness optimization to calculate the first power allocation, the first rate allocation, and the first precoder allocation for the private stream of the user device.

In some implementations, the device is a base station serving a quantity of user devices that is greater than a quantity of antennas of the base station. In some implementations, the device serves multiple user devices and provides a non-zero ergodic rate for each of the multiple user devices.

As further shown in Fig. 4, process 400 may include determining first parameters or second parameters for the first power allocation, the first rate allocation, and the first precoder allocation (block 430). For example, the device may determine first parameters or second parameters for the first power allocation, the first rate allocation, and the first precoder allocation, as described above. In some implementations, determining the first parameters or the second parameters for the first power allocation, the first rate allocation, and the first precoder allocation includes determining the first parameters for the first power allocation, the first rate allocation, and the first precoder allocation based on first settings, or determining the second parameters for the first power allocation, the first rate allocation, and the first precoder allocation based on second settings.

As further shown in Fig. 4, process 400 may include generating a first transmit signal and a first data allocation based on the first power allocation, the first rate allocation, the first precoder allocation, and the first parameters or the second parameters (block 440). For example, the device may generate a first transmit signal and a first data allocation based on the first power allocation, the first rate allocation, the first precoder allocation, and the first parameters or the second parameters, as described above.

As further shown in Fig. 4, process 400 may include providing the first transmit signal, with the first data allocation, to the user device via the private and common streams (block 450). For example, the device may provide the first transmit signal, with the first data allocation, to the user device via the private stream, as described above. In some implementations, providing the first transmit signal, with the first data allocation, to the user device via the private stream includes providing the first transmit signal, with the first data allocation, to the user device via the private stream and in accordance with a rate-splitting multiple access framework.

In some implementations, process 400 includes calculating, based on determining to utilize the imperfect CSIT, a second power allocation, a second rate allocation, and a second precoder allocation for the private stream of the user device, and determining third parameters or fourth parameters for the second power allocation, the second rate allocation, and the second precoder allocation. In some implementations, process 400 includes generating a second transmit signal and a second data allocation based on the second power allocation, the second rate allocation, the second precoder allocation, and the third parameters or the fourth parameters, and providing the second transmit signal, with the second data allocation, to the user device via the private stream. In some implementations, providing the second transmit signal, with the second data allocation, to the user device via the private stream includes providing the second transmit signal, with the second data allocation, to the user device via the private stream and in accordance with a rate-splitting multiple access framework.

In some implementations, calculating the second power allocation, the second rate allocation, and the second precoder allocation for the private stream of the user device includes utilizing a maximum-minimum fairness optimization to calculate the second power allocation, the second rate allocation, and the second precoder allocation for the private stream of the user device. In some implementations, determining the third parameters or the fourth parameters for the second power allocation, the second rate allocation, and the second precoder allocation includes determining the third parameters for the second power allocation, the second rate allocation, and the second precoder allocation based on first settings, or determining the fourth parameters for the second power allocation, the second rate allocation, and the second precoder allocation based on second settings.

In some implementations, process 500 includes providing a common stream to the user device and to other user devices associated with the device.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

**Claims**

1. A method, comprising:

    determining, by a device, whether to utilize perfect channel state information at transmitter, CSIT, or imperfect CSIT;
    calculating, by the device and based on determining to utilize the perfect CSIT, a first power allocation, a first rate allocation, and a first precoder allocation for a private stream of a user device;
    determining, by the device, first parameters or second parameters for the first power allocation, the first rate allocation, and the first precoder allocation;
    generating, by the device, a first transmit signal and a first data allocation based on the first power allocation, the first rate allocation, the first precoder allocation, and the first parameters or the second parameters; and
    providing, by the device, the first transmit signal, with the first data allocation, to the user device via the private stream.

2. The method of claim 1, further comprising:

    calculating, based on determining to utilize the imperfect CSIT, a second power allocation, a second rate allocation, and a second precoder allocation for the private stream of the user device; and
    determining third parameters or fourth parameters for the second power allocation, the second rate allocation, and the second precoder allocation.

3. The method of claim 2, further comprising:

    generating a second transmit signal and a second data allocation based on the second power allocation, the second rate allocation, the second precoder allocation, and the third parameters or the fourth parameters; and
    providing the second transmit signal, with the second data allocation, to the user device via the private stream.

4. The method of claim 3, wherein providing the second transmit signal, with the second data allocation, to the user device via the private stream comprises:
    providing the second transmit signal, with the second data allocation, to the user device via the private stream and in accordance with a rate-splitting multiple access framework.

5. The method of claim 2, wherein calculating the second power allocation, the second rate allocation, and the second precoder allocation for the private stream of the user device comprises:
    utilizing a maximum-minimum fairness optimization to calculate the second power allocation, the second rate allocation, and the second precoder allocation for the private stream of the user device.

6. The method of claim 2, wherein determining the third parameters or the fourth parameters for the second power allocation, the second rate allocation, and the second precoder allocation comprises:

    determining the third parameters for the second power allocation, the second rate allocation, and the second precoder allocation based on first settings; or
    determining the fourth parameters for the second power allocation, the second rate allocation, and the second precoder allocation based on second settings.

7. The method of claim 1, wherein the device is a base station serving a quantity of user devices that is greater than a quantity of antennas of the base station.

8. A device, comprising:

one or more memories; and
one or more processors, coupled to the one or more memories, configured to:

determine whether to utilize perfect channel state information at transmitter, CSIT, or imperfect CSIT;
calculate, based on determining to utilize the perfect CSIT, a first power allocation, a first rate allocation, and a first precoder allocation for a private stream of a user device,
wherein the device is a base station serving a quantity of user devices that is greater than a quantity of antennas of the base station;
determine first parameters or second parameters for the first power allocation, the first rate allocation, and the first precoder allocation;
generate a first transmit signal and a first data allocation based on the first power allocation, the first rate allocation, the first precoder allocation, and the first parameters or the second parameters; and
provide the first transmit signal, with the first data allocation, to the user device via the private stream.

9. The device of claim 8, wherein the device serves multiple user devices and provides a non-zero ergodic rate for each of the multiple user devices.

10. The device of claim 8, wherein the one or more processors, to determine whether to utilize perfect CSIT or imperfect CSIT, are configured to:
determine whether to utilize perfect CSIT or imperfect CSIT based on one or more of channel estimation errors, finite-length CSI feedback, user device mobility, latency, or pilot contamination associated with the device.

11. The device of claim 8, wherein the one or more processors, to determine the first parameters or the second parameters for the first power allocation, the first rate allocation, and the first precoder allocation, are configured to:

determine the first parameters for the first power allocation, the first rate allocation, and the first precoder allocation based on first settings; or
determine the second parameters for the first power allocation, the first rate allocation, and the first precoder allocation based on second settings.

12. The device of claim 8, wherein the one or more processors, to provide the first transmit signal, with the first data allocation, to the user device via the private stream, are configured to:
provide the first transmit signal, with the first data allocation, to the user device via the private stream and in accordance with a rate-splitting multiple access framework.

13. The device of claim 8, wherein the one or more processors are further configured to:
provide a common stream to the user device and to other user devices associated with the device.

14. The device of claim 8, wherein the one or more processors, to calculate the first power allocation, the first rate allocation, and the first precoder allocation for the private stream of the user device, are configured to:
utilize a maximum-minimum fairness optimization to calculate the first power allocation, the first rate allocation, and the first precoder allocation for the private stream of the user device.

15. A non-transitory computer-readable medium storing a set of instructions, the set of instructions comprising:
one or more instructions that, when executed by one or more processors of a device, cause the device to operate as the device according to any one of claims 8 to 14.

**FIG. 1A**

EP 4 447 564 A1

100

Base
station

Determine
CSIT

**105**
Determine whether to utilize perfect channel state information at
transmitter (CSIT) or imperfect CSIT

Perfect
CSIT

Imperfect
CSIT

# FIG. 1B

100

Base station

Calculate allocations

**110**
Calculate, based on determining to utilize the perfect CSIT, a first power allocation, a first rate allocation, and a first precoder allocation for a private stream of a user device

First power allocation

First rate allocation

First precoder allocation

Perfect CSIT

**FIG. 1C**

EP 4 447 564 A1

100

Base station

Determine parameters

**115**
Determine first parameters or second parameters for the first power allocation, the first rate allocation, and the first precoder allocation

First parameters

Second parameters

First power allocation

First rate allocation

First precoder allocation

# FIG. 1D

EP 4 447 564 A1

100 ⟶

Base
station

Calculate
allocations

**120**
Calculate, based on determining to utilize the imperfect CSIT, a
second power allocation, a second rate allocation, and a second
precoder allocation for the private stream of the user device ⟶

Second
power
allocation

Second
rate
allocation

Second
precoder
allocation

Imperfect
CSIT

# FIG. 1E

EP 4 447 564 A1

100

Base station

Determine parameters

**125**
Determine third parameters or fourth parameters for the second power allocation, the second rate allocation, and the second precoder allocation

Third parameters

Fourth parameters

Second power allocation

Second rate allocation

Second precoder allocation

# FIG. 1F

EP 4 447 564 A1

100

**130**
Generate a first transmit signal and a first data allocation based on the first power allocation, the first rate allocation, the first precoder allocation, and the first parameters or the second parameters

Base station

Generate transmit signal

First transmit signal

First power allocation

First rate allocation

First precoder allocation

First parameters

Second parameters

**FIG. 1G**

EP 4 447 564 A1

100

Base station

Generate transmit signal

**135**
Generate a second transmit signal and a second data allocation based on the second power allocation, the second rate allocation, the second precoder allocation, and the third parameters or the fourth parameters

Second transmit signal

Second power allocation

Second rate allocation

Second precoder allocation

Third parameters

Fourth parameters

**FIG. 1H**

**140**

Provide the first transmit signal or the second transmit signal, with the first data allocation or the second data allocation, to the user device via the private and common streams

Base station

User device *k*

**FIG. 1I**

200 ⟶

```
┌──────────┐        ┌─────────────┐        ┌──────────┐
│   Base   │   ⚡    │   Network    │   ⚡    │ User device│
│  station │        │     230     │        │    220    │
│   210    │        │             │        │           │
└──────────┘        └─────────────┘        └──────────┘
```

**FIG. 2**

| | |
|---|---|
| Processor<br><br>320 | Memory<br><br>330 |

Bus
310

| | | |
|---|---|---|
| Input<br>Component<br><br>340 | Output<br>Component<br><br>350 | Communication<br>Component<br><br>360 |

**FIG. 3**

EP 4 447 564 A1

400

```
      ┌──────────────────────────────────────────────────────────┐
410 ~ │ Determine whether to utilize perfect channel state       │
      │ information at transmitter (CSIT) or imperfect CSIT       │
      └──────────────────────────────────────────────────────────┘
                              │
                              ▼
      ┌──────────────────────────────────────────────────────────┐
420 ~ │ Calculate, based on determining to utilize the perfect   │
      │ CSIT, a first power allocation, a first rate allocation, │
      │ and a first precoder allocation for a private stream     │
      │ of a user device                                         │
      └──────────────────────────────────────────────────────────┘
                              │
                              ▼
      ┌──────────────────────────────────────────────────────────┐
430 ~ │ Determine first parameters or second parameters for the  │
      │ first power allocation, the first rate allocation, and   │
      │ the first precoder allocation                            │
      └──────────────────────────────────────────────────────────┘
                              │
                              ▼
      ┌──────────────────────────────────────────────────────────┐
440 ~ │ Generate a first transmit signal and a first data        │
      │ allocation based on the first power allocation, the      │
      │ first rate allocation, the first precoder allocation,    │
      │ and the first parameters or the second parameters        │
      └──────────────────────────────────────────────────────────┘
                              │
                              ▼
      ┌──────────────────────────────────────────────────────────┐
450 ~ │ Provide the first transmit signal, with the first data   │
      │ allocation, to the user device via the private and       │
      │ common streams                                           │
      └──────────────────────────────────────────────────────────┘
```

**FIG. 4**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIJIE MAO ET AL: "Rate-Splitting Multiple Access: Fundamentals, Survey, and Future Research Trends", ARXIV.ORG, CORNELL UNIVERSITY LIBRARY, 201 OLIN LIBRARY CORNELL UNIVERSITY ITHACA, NY 14853, 30 September 2022 (2022-09-30), XP091330505, DOI: 10.1109/COMST.2022.3191937 * Sections: IV, IV.A, IV.A.1), IV.B * ----- | 1-15 | INV. H04W52/24 H04B7/06 H04W52/34 |
| X | DIZDAR ONUR ET AL: "Rate-Splitting Multiple Access to Mitigate the Curse of Mobility in (Massive) MIMO Networks", IEEE TRANSACTIONS ON COMMUNICATIONS, IEEE SERVICE CENTER, PISCATAWAY, NJ. USA, vol. 69, no. 10, 20 July 2021 (2021-07-20), pages 6765-6780, XP011883485, ISSN: 0090-6778, DOI: 10.1109/TCOMM.2021.3098695 [retrieved on 2021-10-14] * Sections: I.A., II. page 6768 right column, III. page 6769 left column top * ----- | 1-15 | |

TECHNICAL FIELDS
SEARCHED (IPC)

H04W
H04B

The present search report has been drawn up for all claims

| Place of search | Date of completion of the search | Examiner |
|---|---|---|
| The Hague | 22 August 2024 | Lustrini, Donato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)